# EUROPEAN PATENT APPLICATION

(11) **EP 0 659 003 A1**
(43) Date of publication of application: **21.06.1995**
(21) Application number: 94308958.1
(22) Date of filing: 02.12.1994
(51) Int. Cl.: H04M 1/02

(54) **Telephone set structure**

(30) Priority: 16.12.1993 US 170072
(71) Applicant: NORTHERN TELECOM LIMITED, Montreal, Quebec H2Y 3Y4 (CA)
(72) Inventor: Read, Clifford D., Stittsville, Ontaria K2S 1G8 (CA); Tsuji, Bruce H., Nepean, Ontario K2H 8A9 (CA); Johns, Bradley, Calgary, Alberta T2N 2M4 (CA); Koens, Paul J., Ashton, Ontario K0A 1B0 (CA)
(74) Representative: Ryan, John Peter William

(57) **Abstract**

A telephone base (10) is provided with a bay (26) for receiving an electronic module (60). The base is formed with two guide extensions which define the bay between them and act to guide a module into the bay. Modules may thus be interchangeable and small compared to the base while providing different electronic functions. Retaining features for a module is incorporated to prevent accidental release of a module from the bay, e.g. as by dropping. Frictional engagement between the module and the base may provide the retaining features.

## Description

This invention relates to telephone bases.

A telephone comprises, in the main, a handset which is carried, when not in use, upon a telephone base so as to hold a hook switch of the phone in an "off" position. Either the base or the handset may include a telephone key pad or rotary dial for phone operation.

Telephones of specific design are already known which may be used with interchangeable electronic modules for providing a variety of different electronic functions to the telephones. In such specific designs which have been available for about twenty years, the modules and the telephone bases are located side-by-side upon a support surface such as a desk top while being electrically interconnected. A problem attendant with such telephone base and module designs and arrangements is that they are extraordinarily bulky, the bulkiness becoming greater upon assembly of module and telephone base. For aesthetic reasons, the modules have been designed with substantially the same profile as the telephone bases to which they are to be connected so as to match module with telephone base and give the impression that base and module assembly is a single structure. Such an aesthetic requirement has contributed to a large extent to the bulkiness of the assembly. In addition, the bulkiness of such telephone bases and module arrangements is attended by undesirable heaviness of the components which are not easily handled in their assembled form without becoming detached from one another. Also inordinate amounts of material are required for making housing parts for both the telephone bases and the modules.

The present invention seeks to provide a telephone base and a base and module combination which may minimize the above problems and disadvantages.

According to one aspect of the present invention there is provided a telephone base formed with a bay for receiving and supporting an electronic module within the base, the base also having an electrical connector for electrical connection to the electronic module when the module is disposed within the bay.

With the above base according to the invention the module is received and supported within the bay. Thus, the module is of necessity of smaller structure than the telephone base thereby minimizing the overall size of the assembly and the base. Hence, as the module is supported by the base, the module does not require the height requirements of the base while the module may still follow and blend with the profile of the base should this be required.

In a preferred arrangement, means is provided in the base for removably retaining the module within the bay. The module is thus retainable positively within the base and may resist detachment from the base even when dropped or otherwise dealt with harshly. The means for retaining the module in the bay may be by any desirable design such as, for instance, latching arrangements. However, such arrangements may be awkward to operate and expensive to manufacture. Preferably, the base comprises surface means for frictionally engaging the module to resist its removal from the bay. Frictional force may be as desired for holding purposes but is preferably such as to prevent the module from accidental removal from the bay upon dropping of the assembly of base and module.

In a particularly advantageous arrangement, a telephone base is provided with guide means for guiding the module into the bay. In particular, the base may comprise a body and the guide means may comprise two guide extensions of the body which extend laterally outwards from the body in spaced positions, one on each side of the bay, with ends of the extensions remote from the body defining an entrance for the module into the bay. These extensions may have molded guide recesses for guiding the module into the bay. Preferably, each extension is formed with guide slots for receiving the module into the bay and each guide slot may be formed by two mating housing parts which form the extension. A registration flange provided between the two housing parts for location of one part relative to the other upon assembly provides a frictional surface at one end of the flange for frictionally engaging the module at the entrance end of the slot into the bay. With this arrangement, the flange operates both as the means for mating the two housing parts together and also for providing the frictional engagement with the module to prevent its removal from the bay.

The base is preferably also provided with a bottom wall which defines a lower boundary to the bay. The bottom wall may have an intermediate region and two edge regions connecting the intermediate region with the extensions. In this arrangement, if one of the edge regions is inclined to the intermediate region and a stand is provided for the base, the stand may be located in one position in engagement with the edge region of the base to support the bottom wall and in another position in engagement with the intermediate region also to support the bottom wall. Thus, in a situation where the module is itself supported by the bottom wall then, in either position of the base upon the stand, the weight of the module is supported by the stand itself.

The invention also includes a telephone base and electronic module combination wherein the base is formed with a bay for receiving and supporting the electronic module within the base, mating electrical connectors being provided by the base and the module for mating together when the module is disposed within the bay.

One embodiment of the invention will now be described, by way of example, with reference to the accompanying drawings, in which:-
Figure 1 is an isometric view of a telephone base according to the embodiment;
Figure 2 is a view similar to Figure 1, but on smaller scale, and showing an electronic module as it is being fed into a bay of the telephone base;
Figure 3 is a view similar to Figure 1 of the telephone base and module assembly;
Figure 4 is an end view of the assembly with the base supported upon the stand in one position;
Figure 5 is a cross-sectional view taken along line V-V in Figure 3 through the assembly with the base supported on the stand in the position of Figure 4
Figure 6 is a view through the module and similar to Figure 5;;
Figure 7 is a view similar to Figure 3 and showing the base supported on the stand in an alternative position;
Figure 8 is an enlarged isometric view of one end of the base and showing a module in position;
Figure 9 is a sectioned part of the base and module taken along line 1X-1X in Figure 8;
Figure 10 is an isometric view of the one end of the base from the opposite direction from Figure 8 and showing a module being moved into the bay; and
Figure 11 is a view similar to Figure 3 and showing the base with a alternative module supported within the bay.

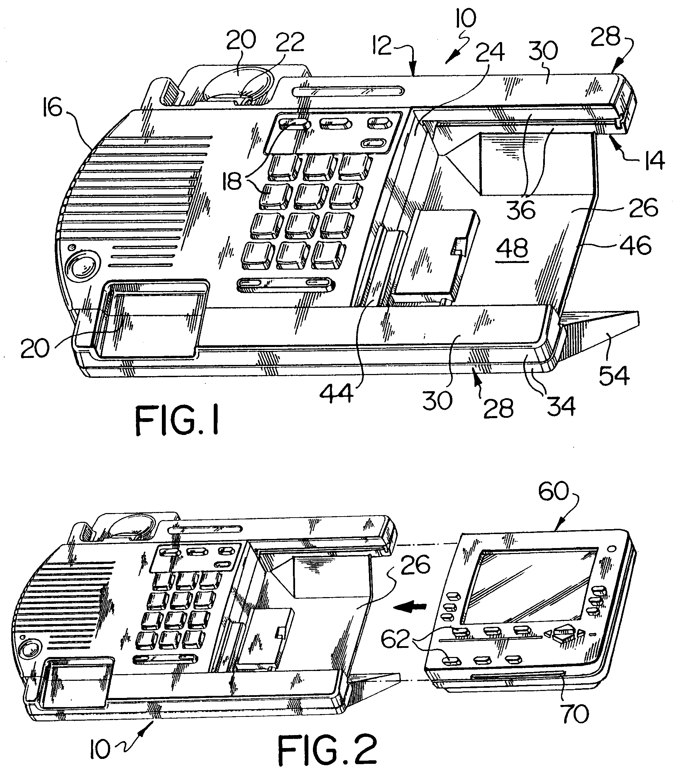

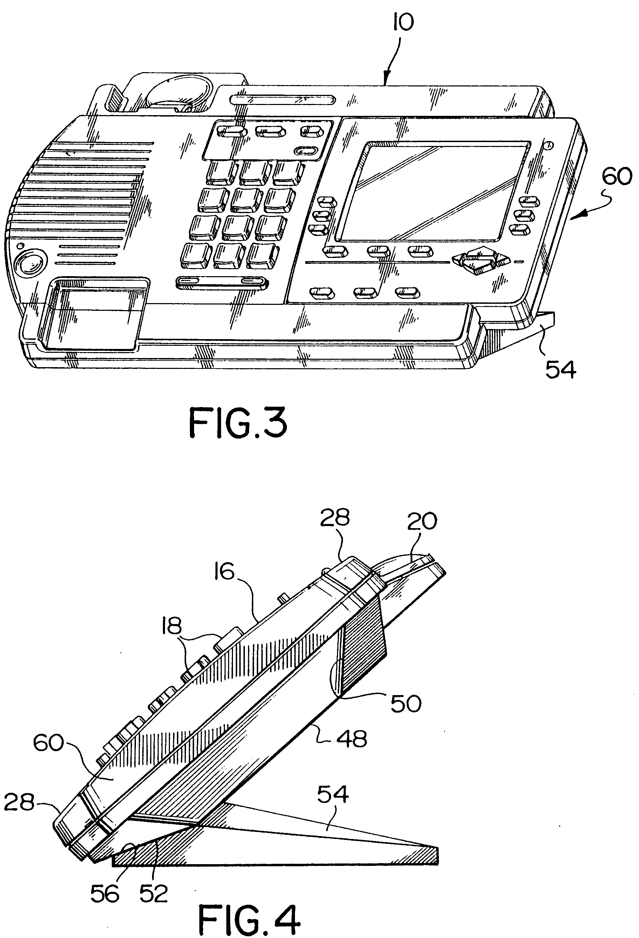

As shown by Figure 1 a telephone base 10 has a housing provided by a plurality of molded plastic housing parts. As will be seen from Figure 1, these housing parts comprise a top housing part 12 and a lower housing part 14 which register together to form a chamber (not shown) beneath a further top housing part 16 for containing electronic equipment for phone operation. The housing part 16 lies in a well in the housing part 12 so that the upper surfaces of the housing parts 12 and 16 blend together to form a substantially smooth slightly convex profile (see Figure 4). The housing part 16 overlies a dialing pad within the base, the dialing buttons 18 of which project through apertures in the housing part 16 for manual operation. At the left-hand end of the housing which is horizontally elongate, a receiving station is provided for a handset to be used with the base, this receiving station comprising two handset receiving depressions 20 formed into the housing parts 12 and/or 16 together with a hook switch 22 which projects into the upper recess 20 from within the base 10.

Along the horizontal extent of the housing part 16, the housing parts 12, 14 and 16 provide a body of the base which defines the chamber for containing the electronic equipment, the chamber also being completed by and end wall 24 which extends downwardly from the right-hand end of the housing part 16 as shown.

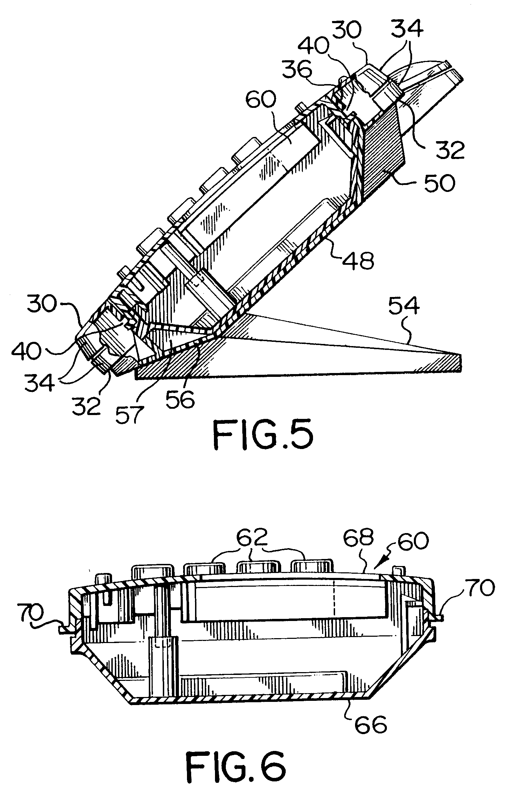

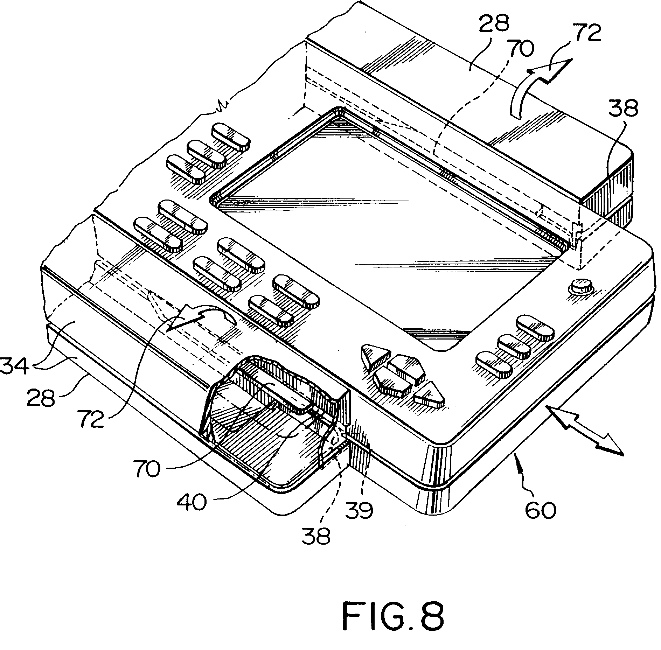

The telephone base is formed with a bay 26 for receiving and supporting an electronic module within the base. The bay 26 is partly formed by a module guide means comprising two guide extensions 28 of the body which extend laterally of the body one on each side of the bay. In particular, and as shown also in Figures 5 and 8, these two extensions extend horizontally from one end of the body, i.e. the end provided with the end wall 24, with each extension being formed as a box structure comprising upper and lower main walls 30 and 32, respectively, of the housing parts 12 and 14, outer side walls 34 of the housing parts and inner side walls 36 of the housing parts. The outer side walls 34 are registered together. The housing parts 12 and 14 are held together securely by screws (not shown) extending upwardly through the housing parts.

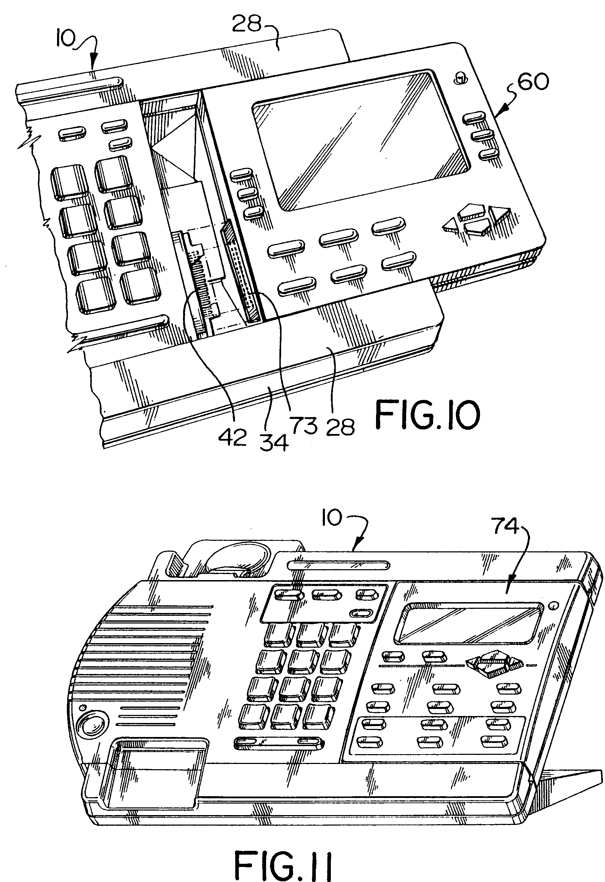

Guide means is provided for guiding a module into the bay 26. This guide means is provided by two guide slots 40 which face inwardly into the bay (see particularly Figures 5, 8 and 9) and are provided along the lengths of the two extensions 28, each guide slot being conveniently formed by spacing apart of the inner side walls 36 of the housing parts 12 and 14. A module is thus movable horizontally into the bay 26 by passing into the entrance into the bay which is provided by the free ends of the two extensions 28. Means is also provided for removably retaining the module within the bay. This means operates on the basis of frictional engagement between the module and a part of the base and is conveniently provided by providing a frictional surface at entrance ends of the slots 40 into the bay. As may be seen more particularly from Figures 5 and 9, this frictional surface 39 in each case is provided by an end of an end wall 38 at the end of each extension 28, the end wall 38 being an extension of an associated outer wall 34 with the surface 39 disposed at the end of the corresponding slot 40. This effectively limits the distance between ends of the flanges across the bay 26 at its entrance.

An electrical connector 42 for connecting the electronic circuitry within the base 10 is located so as to face through an aperture in the wall 24. The connector 42 is shown by Figure 10 wherein an overhanging cantilever wall 44 which extends outwardly from the end wall 24 is shown cut away for purposes of illustration. Cantilever wall 44 is provided to divert away from the connector, any fluid material which is dropped onto the top of the telephone base and which would tend to flow down the end wall 24. In addition, the wall 44 serves the purpose of providing an increased length of path to provide a weakening effect for static electricity flowing across surfaces of the telephone base and which could cause damage to the circuitry.

The base also includes a bottom wall 46 for the bay. This bottom wall comprises an intermediate planar region 48 (Figures 1, 2 and 5) which faces upwardly through an opening between the two extensions 28 and two edge regions 50 and 52, both of which are inclined relative to the intermediate region and connect the intermediate region with the lower wall 32 of the two extensions 28. The bay 26 is thus deeper than either of the extensions 28.

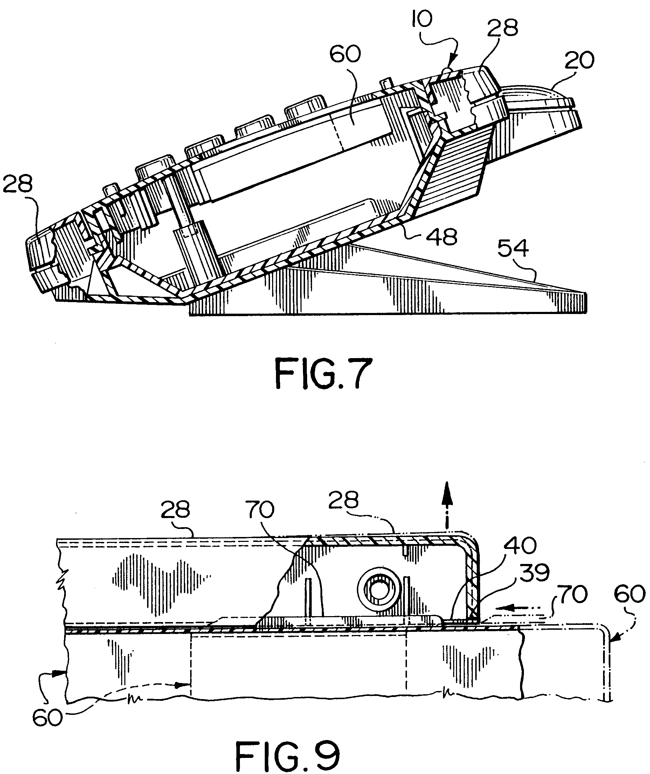

A molded stand 54 is provided for locating the base upon a horizontal support surface in either one of two positions as shown by Figures 4 and 5 or in Figure 7. This stand 54 is low in height and has at one side, a longitudinal upwards facing side surface 56 for supporting the base in either of the two positions. The stand 54 and the housing part 14 are provided with a resilient latching and latch recess receiving arrangement (not shown) to enable the base to be carried upon the stand in either of the two positions. The latching and recess arrangement is not described herein, and would be clear to anyone skilled in the particular art to which this specification is addressed. However, as may be seen from Figure 4, the base in its one position of support is carried upon the stand 54 with the one edge region 52 of the bottom wall 46 substantially intimately contacted by the surface 56 of the stand to support the bottom wall 46 of the bay, the edge region 52 continuing from the bay beneath the housing part 16 so that the whole of the base 10 is supported in like manner. Stiffening ribs 57 extend normal to the edge region 52 into the bay to strengthen the structure. One of the ribs 57 is shown by its substantially triangular shape in Figure 5. Similarly, as shown by Figure 7 in the other position of the base 10, the surface 56 of the stand is intimately engaged by the intermediate region 48 of the bottom wall 46 so as to support the bottom wall, the intermediate region also continuing beneath the housing part 16 so that the whole base is supported in like manner. As may be seen from the above description, the telephone base may thus be supported with the upper surface 58 of the base inclined in either of two positions with the base diverging upwardly away from the stand. In either arrangement, therefore, the effective height of the telephone base is quite substantial when located upon the stand while the depth of the bay 26 is relatively shallow for receiving and supporting a similarly shallow module a substantial distance above the support surface for the stand 54.

As shown by Figures 2, 3 and 10, an electronic module 60 is basically rectangular in plan and is also provided with pushbuttons 62 for manual operation and a display screen 64 which is provided for serving specific functions. As indicated in the last above paragraph, the module 60 is extremely shallow and has a lower surface 66 (Figure 6) which in cross-section is shaped so as to be supported by the bottom wall 46 of the bay 26 when fitted into the bay. An upper surface 68 of the module is shaped similarly to the housing part 16 so as to follow the upper contour of the base and give the appearance that the module when fitted into the bay forms part of the telephone base.

The module 60 is provided with two guide rails 70 disposed along its upper and lower sides, the guide rails being for reception and movement along the guide slots 40 provided by the extensions 28. The distance between outer edges of the guide rails 70 is such that the guide rails will move freely along the slots 40 when inwardly into the bay from the frictional surfaces 39. This is the full outline position of Figures 8 and 9. However, this distance between the guide rails 70 is slightly greater than the distance between the frictional surfaces 39 of the two extensions 28 when the extensions 28 are in a normal relaxed condition. As will be noticed, the two ends of each of the guide rails 70 are slightly tapered or rounded. This enables the module to be passed between the frictional surfaces 39 for insertion into or removal of the module from the bay and as the distance across the guide rails 70 is greater than between the surfaces 39, then this results in resilient urging of the extensions 28 apart slightly to allow for the movement of the guide rails between the surfaces 39. This movement of the extensions 28 which is shown by arrows 72 in Figure 8, is accommodated by resilient flexing of the extensions assisted by resilient flexing of the bottom wall 46 of the base. Figure 9 also shows the resiliently flexed position of an extension 28 (in chain dot) when the module 60 moves between the full outline position inside the bay and dotted outline position with the rails 70 outside the bay and beyond the surfaces 39. It follows therefore that as the module is being inserted into or removed from the bay 26, slight resilient spreading apart of the extensions 28 results until the guide rails 70 have passed wholly beyond the surfaces 39. With the guide rails 70 passed wholly beyond the surfaces 39 when the module is completely within the bay 26 (Figure 3) the extensions return to their normal unflexed states and a connector 73 (Figure 10) of the module 60 is electrically connected to the connector 42 extending through the end wall 24 of the base 10 so as to electrically connect the electronic circuitry in the module with that in the base 10.

It follows therefore that there is resistance to removal of the module from within the bay once it has been received Ideally, the design is such that there is sufficient frictional interference between the rails 70 and the friction surfaces 39 that merely dropping the assembled unit onto the floor will not dislodge the module 60 from within the bay.

As may be seen from the above description, the module 60 is of particularly small size while presenting an upper surface which forms a smooth extension of the upper surface of the base even though this upper surface extends at an angle of inclination at a relatively large distance from a support surface as dictated by the stand 54. Clearly, therefore, the embodiment provides for a combination in which the module is exceedingly small compared to the base structure while still providing a pleasing aesthetic function in addition to its electronic operating function. The use of the bay thereby permits a compact assembly of base and module to be made. Of particular interest is that the module 60 is accommodated within the bay 26 with its weight completely supported by the telephone base. In this position, as can be seen from Figures 3 and 4 particularly, the module in being supported by the intermediate and edge regions of the bottom wall has its weight also supported by the stand 54 in either of the two base positions.

Ideally, the base 10 is designed to accommodate any one of a plurality of modules which are designed for operation with the base and for providing different functional requirements for the telephone. For instance, as shown by Figure 11, with the module 60 removed from the bay a different module 74 is provided with different electronic functionality, this latter module being slightly longer than the module 60 while still being accommodated within the bay in the same manner. Flanges (not shown) upon the module 74 are similar to the flanges 70 on the module 60. It should be pointed out that with the Figure 10 structure, although the module 74 extends outwardly beyond the extensions 28, the flanges 70 of the module lie wholly within the slots 40 so as to avoid contact with the frictional surfaces 39 in the assembled position. The extensions 28 lie in their normal unflexed positions towards each other so as to frictionally resist any tendency for the module to fall from the bay inadvertently.

## Claims

1. A telephone base formed with a bay for supporting an electronic module in an operational position within the base, guide means having an entrance for accepting into the operational position, a module previously detached from the base and for detachment of the module from the operational position and from the base, the bay having an open top to expose an upper surface of the module when the module is disposed in its operational position, means for removably retaining the module in its operational position within the base, the retaining means capable of being overcome when a positive detaching force is applied to the module so as to enable removal of the module completely from the telephone base.

2. A telephone base according to claim 1, characterised in that the means for removably retaining the module comprises surface means of the base for frictionally engaging the module to resist removal of the module from the bay.

3. A telephone base according to claim 2, characterised in that the base comprises a body and that the guide means comprise two guide extensions of the body extending laterally outwardly of the body in spaced apart positions one on each side of the bay, ends of the extensions remote from the body defining the entrance into the bay for the module.

4. A telephone base according to claim 3, characterised in that the extensions are formed with guide slots for receiving the module into the bay, and that the means for removably retaining the module comprises surface means at entrance ends of the slots for frictionally engaging the module to resist removal of the module from the bay.

5. A telephone base according to claim 4, characterised in that each extension is formed by two mating housing parts which define a guide slot between them, one of the housing parts having a registration flange registered within the other housing part with an end of the registration flange providing a surface means at the entrance end of the slot for frictionally engaging the module.

6. A telephone base according to claim 4, characterised in that the remote ends of the extensions are resiliently flexible apart to permit movement of the module between the surface means.

7. A telephone base according to claim 6, characterised in that the base is provided with a bottom wall extending between the extensions and defining a lower boundary to the bay, the bottom wall being resiliently flexible to permit resilient flexing movement apart of the extensions.

8. A telephone base according to claim 4, characterised in that the base is provided with a bottom wall extending between the extensions and defining a boundary to the bay, and the bottom wall has a low intermediate region between edge regions which connect the intermediate region to the extensions, one of the edge regions being inclined to the intermediate region, and a stand is provided for the base, the stand locatable in one position in engagement with said one edge region of the base to support the bottom wall, and in another position in engagement with the intermediate region of the base to support the bottom wall.

9. A combination of a telephone base and an electronic module wherein the telephone base is formed with a bay which is open at the top, guide means leading to the bay and having an entrance to the guide means, the module being acceptable from a detached position from the base, through the entrance, and along the guide means and into an operational position within the bay with an upper surface of the module exposed through the open top of the bay, the telephone base also having means for removably retaining the module in its operational position within the bay, the retaining means capable of being overcome when a positive detaching force is applied to the module to enable removal of the module completely from the telephone base.

10. A combination according to claim 9, characterised in that the base comprises a body and two module guide extensions extend horizontally outwardly from the body in spaced apart position, one on each side of the bay, the extensions having ends remote from the body, the remote ends defining the entrance into the bay for the module.

11. A combination according to claim 10, characterised in that the extensions are formed with guide slots and that the module is provided with guide rails for guiding the module along the slots during movement of the module into and out of the bay, and that the means for removably retaining the module comprises surface means at entrance ends of the slots for frictionally engaging the module to resist removal of the module from the bay.

12. A combination according to claim 11, characterised in that each extension is formed by two mating housing parts which define a guide slot between them, one of the housing parts having a registration flange registered with the other housing part with an end of the registration flange providing a surface means at the entrance end of the slot for frictionally engaging the module.

13. A combination according to claim 11, characterised in that the remote ends of the extensions are resiliently flexible apart and movement of the module between the surface means causes resilient flexing apart of the remote ends to permit movement of the module out of the bay.

14. A combination according to claim 13, characterised in that the base is provided with a bottom wall extending between the extensions and defining a lower boundary to the bay, and that the module has a bottom surface which engages and is supported by the bottom wall with the module located within the bay.

15. A combination according to claim 14, characterised in that the bottom wall has a low intermediate region between edge regions which connect the intermediate region to the extensions, one of the edge regions being inclined to the intermediate region, and that a stand is provided for the base, the stand locatable in one position in engagement with said one region of the base to support the bottom wall and the module and in another position in engagement with the intermediate region of the base to support the bottom wall and the module.
